# EUROPÄISCHE PATENTANMELDUNG

(11) **EP 3 392 807 A2**
(43) Veröffentlichungstag der Anmeldung: **24.10.2018**
(21) Anmeldenummer: 18176276.6
(22) Anmeldetag: 06.06.2018
(51) Int. Cl.: G06N 5/02, G06N 3/00

(54) **COMPUTERIMPLEMENTIERTES VERFAHREN ZUR INTERAKTION MIT EINEM BENUTZER**

(71) Anmelder: Kirchmayr, Georg, 4060 Leonding (AT)
(72) Erfinder: Kirchmayr, Georg, 4060 Leonding (AT)
(74) Vertreter: Burger, Hannes

(57) **Zusammenfassung**

Die Erfindung betrifft ein computerimplementiertes Verfahren, umfassend die Schritte:
- Erfassen eines durch einen Benutzer in eine Interaktionsschnittstelle (3) eingegebenen Initialeingabestrings (22);
- Verarbeiten des Initialeingabestrings (22) in einem Hauptalgorithmus (18), welcher auf einem Client (9) ausgeführt wird, wobei vom Hauptalgorithmus (18) die einzelnen Wörter des Initialeingabestrings (22) extrahiert werden und daraus Vergleichswörter bestimmt werden;
- Durchführen einer Initialabfrage und dabei vergleichen der einzelnen Vergleichswörter des Initialeingabestrings (22) mit einer Vielzahl von Vergleichsstrings (16), welche auf einem Server (10) in einem Data Lake oder Datawarehouse (12) gespeichert sind;
- Ausführen von definierten Verfahrensschritten, wenn ein vordefinierbarerer Schwellenwert an Übereinstimmung von Vergleichswörtem des Initialeingabestrings (22) mit einem oder mehreren der im Data Lake oder Datawarehouse (12) gespeicherten Vergleichsstrings (16) überschritten wird.

## Beschreibung

Die Erfindung betrifft ein computerimplementiertes Verfahren zur Interaktion mit einem Benutzer.

Aus dem Stand der Technik sind verschiedene Chatbots bekannt. Beispielsweise sind Chatbots bekannt, die eine Benutzereingabe mit Datenbankeinträgen vergleichen und auf eine Anfrage eine in den Datenbankeinträgen zugehörige Antwort geben. Derartige Chatbots sind jedoch in deren Betrieb sehr energieaufwändig, da bei Anfragen eine große Anzahl von Datenbankeinträgen durchsucht werden muss.

Aufgabe der vorliegenden Erfindung war es, die Nachteile des Standes der Technik zu überwinden und ein computerimplementiertes Verfahren zur Verfügung zu stellen, welches in dessen Betrieb eine verbesserte Energiebilanz aufweist.

Diese Aufgabe wird durch ein Verfahren gemäß den Ansprüchen gelöst.

Erfindungsgemäß ist ein Computerimplementiertes Verfahren vorgesehen, dass folgende Verfahrensschritte umfasst:
- Erfassen eines durch einen Benutzer in eine Interaktionsschnittstelle eingegebenen Initialeingabestrings;
- Verarbeiten des Initialeingabestrings in einem Hauptalgorithmus, welcher auf einem Client ausgeführt wird, wobei vom Hauptalgorithmus die einzelnen Wörter des Initialeingabestrings extrahiert werden und daraus Vergleichswörter bestimmt werden;
- Durchführen einer Initialabfrage und dabei vergleichen der einzelnen Vergleichswörter des Initialeingabestrings mit einer Vielzahl von Vergleichsstrings, welche auf einem Server in einem Data Lake oder Datawarehouse gespeichert sind;
- Ausführen der folgenden Verfahrensschritte, wenn ein vordefinierbarerer Schwellenwert an Übereinstimmung von Vergleichswörtem des Initialeingabestrings mit einem oder mehreren der im Data Lake oder Datawarehouse gespeicherten Vergleichsstrings überschritten wird:
   a) Übertragen von Daten vom Server zum Client zum Befüllen von im Hauptalgorithmus bereitgestellten Indexknoten mit Folgevergleichsstrings aus dem Data Lake oder Datawarehouse, wobei jene Folgevergleichsstrings in Indexknoten übertragen werden, welche mit jenem Vergleichsstring verknüpft sind, der eine den vordefinierten Schwellenwert überschreitende Übereinstimmung mit dem Initialeingabestring aufweist;
   b) Ausgabe eines Initialausgabestrings an die Interaktionsschnittstelle, wobei jener Initialausgabestring an die Interaktionsschnittstelle ausgegeben wird, welcher mit jenem Vergleichsstring verknüpft ist, der eine den vordefinierten Schwellenwert überschreitende Übereinstimmung mit dem Initialeingabestring aufweist;
   c) Erfassen eines durch den Benutzer in eine Interaktionsschnittstelle eingegebenen Folgeeingabestrings;
   d) Verarbeiten des Folgeeingabestrings im Hauptalgorithmus, wobei vom Hauptalgorithmus die einzelnen Vergleichswörter aus dem Folgeeingabestring extrahiert werden;
   e) Durchführen einer Folgeabfrage und dabei vergleichen der einzelnen Vergleichswörter des Folgeeingabestrings mit den in den Indexknoten bereitgestellten mit Folgevergleichsstrings;
   f) Auslösen eines Folgebefehls, wenn ein vordefinierbarerer Schwellenwert an Übereinstimmung von Vergleichswörtern des Folgeeingabestrings mit einem oder mehreren der in den Indexknoten bereitgestellten mit Folgevergleichsstrings überschritten wird.

Das erfindungsgemäße Verfahren weist den überraschenden Vorteil auf, dass durch die erfindungsgemäßen Verfahrensschritte eine beträchtliche Effizienzsteigerung im Betrieb des computerimplementierten Verfahrens erzielt werden kann. Dadurch kann eine Energieeinsparung erreicht werden und darüber hinaus die Prozessgeschwindigkeit erhöht werden bzw. die Reaktionszeit verkürzt werden. Insbesondere das dezentrale Verfahren unter Verwendung eines Clients und eines Servers schafft die Basis für die überraschende Effizienzsteigerung. Durch die erfindungsgemäßen Verfahrensschritte kann die Rechenarbeit des Rechners, auf dem der Client ausgeführt wird und auch die Rechenarbeit des Rechners, auf dem der Server ausgeführt wird, vermindert werden, wodurch die Energieeinsparung resultiert. Das erfindungsgemäße Verfahren führt somit zu einer überraschenden Einsparung an physikalischem Energieverbrauch. Dies resultiert aus den verbesserten Taktungsabläufen auf den Rechnern des Clients und des Servers. Das Befüllen der im Hauptalgorithmus bereitgestellten Indexknoten mit Folgevergleichsstrings aus dem Data Lake oder Datawarehouse, welche mit jenem Vergleichsstring verknüpft sind der eine den vordefinierten Schwellenwert überschreitende Übereinstimmung mit dem Initialeingabestring aufweist, bringt den Vorteil mit sich, dass in weiterführenden Anfragen die Anzahl der zu durchsuchenden Dateneinträge geringgehalten werden kann, wodurch eine wesentliche Energieeinsparung erreicht werden kann. Insgesamt weist das erfindungsgemäße Verfahren somit physikalische Effekte auf, die zu einer Stromeinsparung führen. Darüber hinaus können durch die erfindungsgemäßen Verfahrensschritte die zwischen dem Client und dem Server übertragenen Datenmengen möglichst geringgehalten werden.

Der vordefinierte Schwellenwert an Übereinstimmung kann als Prozentzahl definiert sein. Hierbei ist es möglich, dass jedes einzelne Wort eine gleich große Gewichtung aufweist. Wenn beispielsweise 10 Wörter als Vergleichswörter eines Eingabestrings herangezogen werden, so kann jedes Wort eine Gewichtung von 10% aufweisen und die Summe der getroffenen Wörter die übereinstimmende Prozentanzahl definieren. Alternativ dazu ist es beispielsweise auch denkbar, dass die Vergleichswörter beispielsweise nach Wortgruppen oder nach sonstigen Kriterien gewichtet werden und somit nicht einen gleichen Anteil beim Vergleich der Übereinstimmung aufweisen. Somit können bestimmten Vergleichsstrings bestimmte Vergleichswörter zugeordnet werden, welche beispielsweise eine höhere Wichtigkeit aufweisen und als Signalwörter dienen.

Weiters kann es zweckmäßig sein, wenn die Indexknoten im Hauptalgorithmus in einer Layerstruktur mit mehreren Layern strukturiert sind, wobei in der Folgeabfrage der Folgeeingabestring nur mit jenen Folgevergleichsstrings von Indexknoten verglichen wird, welche in einem bestimmten Layer angeordnet sind. Eine derartige Layerstruktur bringt den Vorteil mit sich, dass Folgevergleichsstrings für mehrere Interaktionsschritte in einer Interaktionssession bereitgehalten werden. Dies bringt ebenfalls eine überraschende Effizienzsteigerung mit sich, da die insgesamt übertragenen Datenmengen reduziert werden können.

Ferner kann vorgesehen sein, dass wenn ein vordefinierbarerer Schwellenwert an Übereinstimmung von Vergleichswörtern des Initialeingabestrings mit einem oder mehreren der im Data Lake oder Datawarehouse gespeicherten Vergleichsstrings überschritten wird, zusätzlich aus einem Modulreservoir jene Module geladen werden, welche diesem Vergleichsstring zugeordnet sind. Dies bringt den Vorteil mit sich, dass auf Basis des Initialeingabestrings jene Module geladen werden, welche im weiteren Verlauf der Interaktionssession möglicherweise benötigt werden. Die Module dienen insbesondere dazu, um als Schnittstelle zur externen Datenverarbeitungssystemen, wie etwa Webpages, zur Verfügung zu stellen. Mittels der Module können beispielsweise Bestellvorgänge ausgelöst werden oder beispielsweise Datenfelder von externen Webpages befüllt werden. Die Module dienen somit als technische Schnittstelle zu weiteren Anwendungen.

Darüber hinaus kann vorgesehen sein, dass der vordefinierbare Schwellenwert an Übereinstimmung zwischen 70% und 100%, insbesondere zwischen 75% und 90%, bevorzugt zwischen 78% und 85% der Vergleichswörter des Initialeingabestrings und/oder des Folgeeingabestrings beträgt. Besonders ein vordefinierbarer Schwellenwert in diesem Bereich ermöglicht eine gute Energieeffizienz des computerimplementierten Verfahrens.

Weiters ist es auch denkbar, dass der Schwellenwert im Betrieb des computerimplementierten Verfahrens angepasst wird, sodass eine weitere Effizienzsteigerung ermöglicht wird.

Vorteilhaft ist auch eine Ausprägung, gemäß welcher vorgesehen sein kann, dass wenn ein vordefinierbarerer Schwellenwert an Übereinstimmung von Vergleichswörtern des Initialeingabestrings mit einem oder mehreren der im Data Lake oder Datawarehouse gespeicherten Vergleichsstrings nicht überschritten wird, folgende Verfahrensschritte ausgeführt werden:
- Suche, ob ein vordefinierbarerer Schwellenwert an Übereinstimmung von Vergleichswörtern des Initialeingabestrings mit einem String in einer von als Trusted Sources deklarierten Webseiten überschritten wird, wobei diese Aktion bei so vielen Trusted Sources wiederholt wird, bis eine vorbestimmte Anzahl an Treffer erreicht wird;
- wenn die vorbestimmte Anzahl an Treffer erreicht wird, dann wird die aus diesen getroffenen Trusted Sources ermittelte Information in das Data Lake oder Datawarehouse gespeichert, wobei gleichzeitig der betreffende Initialeingabestring als Vergleichsstring im Data Lake oder Datawarehouse gespeichert wird und mit der ermittelten Information verknüpft wird, sodass bei zukünftigen Interaktionssessions der neu erstellte Vergleichsstring zur Verfügung steht. Durch diese Maßnahme kann erreicht werden, dass die im Data Lake bzw. Datawarehouse abgespeicherte Information ständig erweitert wird, wodurch die Qualität des computerimplementierten Verfahrens während dessen Betrieb verbessert werden kann.

Gemäß einer Weiterbildung ist es möglich, dass wenn die vorbestimmte Anzahl an Treffer nicht erreicht wird, der Initialeingabestring an einen Support zur Informationseingabe durch einen Menschen übermittelt wird. Durch diese Maßnahme kann erreicht werden, dass selbst bei einer in Trusted Sources nicht auffindbaren Information ein neuer Dateneintrag im Data Lake bzw. Datawarehouse erzeugt wird und die Datenqualität im Data Lake bzw. Datawarehouse somit verbessert werden kann.

Ferner kann es zweckmäßig sein, wenn ein vordefinierbarerer Schwellenwert an Übereinstimmung von Vergleichswörtern des Folgeeingabestrings mit den in den Hauptalgorithmus übertragenen Folgevergleichsstrings nicht überschritten wird, folgende Verfahrensschritte ausgeführt werden:
- Suche, ob ein vordefinierbarerer Schwellenwert an Übereinstimmung von Vergleichswörtern des Folgeeingabestrings mit einem String in einer von als Trusted Sources deklarierten Webseiten überschritten wird, wobei diese Aktion bei so vielen Trusted Sources wiederholt wird, bis eine vorbestimmte Anzahl an Treffer erreicht wird;
- wenn die vorbestimmte Anzahl an Treffer erreicht wird, dann wird die aus diesen getroffenen Trusted Sources ermittelte Information in das Data Lake oder Datawarehouse gespeichert, wobei gleichzeitig der betreffende Folgeeingabestring als Folgevergleichsstring im Data Lake oder Datawarehouse gespeichert wird und mit der ermittelten Information verknüpft wird, sodass bei zukünftigen Interaktionssessions der neu erstellte Folgevergleichsstring zur Verfügung steht. Durch diese Maßnahme kann erreicht werden, dass die im Data Lake bzw. Datawarehouse abgespeicherte Information ständig erweitert wird, wodurch die Qualität des computerimplementierten Verfahrens während dessen Betrieb verbessert werden kann.

Darüber hinaus kann vorgesehen sein, dass die Zuordnung von Folgevergleichsstrings zu Vergleichsstrings im Data Lake oder Datawarehouse gelöscht wird, wenn eine bestimmte Anzahl an Interaktionssessions vorliegt, in denen ein vordefinierbarerer Schwellenwert an Übereinstimmung von Vergleichswörtern des Folgeeingabestrings mit den in den Hauptalgorithmus übertragenen Folgevergleichsstrings nicht überschritten wird. Durch diese Maßnahme kann erreicht werden, dass falsche Verknüpfungen zwischen Folgevergleichsstrings und Vergleichsstrings gelöscht werden. Dadurch kann die Effizienz des Gesamtsystems verbessert werden, da unterbunden werden kann, dass unnütze Folgevergleichsstrings in den Hauptalgorithmus geladen werden. Insbesondere trägt dies auch zu Energieeinsparungen bei. Darüber hinaus können durch diese Maßnahme auch die zwischen dem Client und dem Server übertragenen Datenmengen möglichst geringgehalten werden.

Weiters kann vorgesehen sein, dass für häufig vorkommende Initialeingabestrings bzw. Folgeeingabestrings vom Hauptalgorithmus ein Initialausgabestring ausgegeben wird, ohne dass der Hauptalgorithmus dabei auf das Data Lake oder Datawarehouse zugreifen muss. Dies bringt den Vorteil mit sich, dass nicht für jeden eingegebenen Initialeingabestring das Data Lake bzw. Datawarehouse durchsucht werden muss, was ebenfalls Effizienzsteigerungen bzw. Energieeinsparungen mit sich bringt. Darüber hinaus können durch diese Maßnahme auch die zwischen dem Client und dem Server übertragenen Datenmengen möglichst geringgehalten werden.

Gemäß einer besonderen Ausprägung ist es möglich, dass dem Hauptalgorithmus ein Algorithmus zum Planen und Verteilen eines Arbeitsablaufs, wie etwa ein Kubernetes-System, vorgeschalten ist. Dies bringt den Vorteil mit sich, dass bei einem Betrieb des computerimplementierten Verfahrens mit einer großen Anzahl von Benutzern eine entsprechende Arbeitsverteilung im Hauptalgorithmus geschaffen werden kann bzw. ausreichende Rechnerkapazität vorgehalten werden kann, sodass die verschiedenen Interaktionssessions, welche von verschiedenen Benutzern ausgehen, gleichzeitig und effizient durchgeführt werden können.

Entsprechend einer vorteilhaften Weiterbildung kann vorgesehen sein, dass im Data Lake ein Kurzzeitgedächtnis - Speicherplatz ausgebildet ist, welcher die ihm zugeordneten Informationen auf Anforderung abfragt und aktualisiert, wobei insbesondere Websites als Datenquellen dienen. Dies bringt den Vorteil mit sich, dass zwar die Quelle der Informationsbeschaffung bereits vordefiniert bzw. abgespeichert ist, die sich ständig ändernde Information jedoch ausschließlich auf Bedarf abgerufen wird. Dies bringt ebenfalls beträchtliche Effizienzsteigerungen bzw. Energieeinsparungen mit sich.

Ferner kann vorgesehen sein, dass im Data Lake Profile für Benutzer und/oder Profile für Benutzergruppen angelegt werden, wobei die Zuordnungen von zu setzenden Aktionen und verknüpften Folgevergleichsstrings zu einem Vergleichsstring für bestimmte Benutzer Benutzergruppen unterschiedlich sein können. Durch diese Maßnahme kann insbesondere erreicht werden, dass zielgerichtet je nach Benutzer bzw. Benutzergruppe nur gewisse Daten vom Server auf den Client übertragen werden, wodurch der Gesamtdatenstrom geringgehalten werden kann und somit die Energieeffizienz gesteigert werden kann.

Wenn ein vordefinierbarerer Schwellenwert an Übereinstimmung von Vergleichswörtern des Initialeingabestrings mit mehreren der im Data Lake oder Datawarehouse gespeicherten Vergleichsstrings überschritten wird, dann werden die zugeordneten Aktionen von jenem Vergleichsstring geladen bzw. durchgeführt, welcher die höchste Übereinstimmung mit den Vergleichswörtern des Initialeingabestrings erzielt. Mit anderen Worten ausgedrückt, werden die Verknüpfungen zu jenem Vergleichsstring mit den meisten Übereinstimmungen mit dem Initialeingabestring geladen bzw. durchgeführt.

Weiters kann vorgesehen sein, dass neben jenem Vergleichsstring mit den meisten Übereinstimmungen mit dem Initialeingabestring auch die Verknüpfungen der weiteren Vergleichsstrings, welche ebenfalls den vordefinierbareren Schwellenwert an Übereinstimmung von Vergleichswörtern des Initialeingabestrings vom Server in die Indexknoten des am Client ausgeführten Hauptalgorithmus geladen werden und somit für den weiteren Verfahrensablauf zur Verfügung stehen.

Erfindungsgemäß ist ein Computersystem zur Datenverarbeitung vorgesehen, welches Mittel zur Ausführung der erfindungsgemäßen Verfahrensschritte des Computerimplementierten Verfahrens umfasst.

Ferner kann vorgesehen sein, dass der Client auf einer ersten Recheneinheit und der Server auf einer zweiten Recheneinheit ausgebildet sind, wobei die erste Recheneinheit und die zweite Recheneinheit örtlich getrennt voneinander angeordnet sind. Dies bringt den Vorteil mit sich, dass ein zentraler Server mit mehreren Clients gekoppelt sein kann. Insbesondere ist es beispielsweise denkbar, dass die erste Recheneinheit ein PC ist. Der PC kann beispielsweise, mit einem Bildschirm und mit einer Tastatur gekoppelt sein. Natürlich ist es auch denkbar, dass der Bildschirm als Touchscreen ausgeführt ist und direkt zur Eingabe dient. Weiters ist es auch denkbar, dass der PC und der Bildschirm eine Einheit bilden. Weiters kann vorgesehen sein, dass die erste Recheneinheit beispielsweise als Smartphone oder als Tablet ausgeführt ist.

Insbesondere kann vorgesehen sein, dass mehrere unabhängig voneinander laufende Clients auf einen gemeinsamen Server zugreifen.

Erfindungsgemäß ist ein Computerprogrammprodukt vorgesehen, umfassend Befehle, die bei der Ausführung des Programms durch ein Computersystem dieses veranlassen, die Schritte des erfindungsgemäßen Verfahrens auszuführen.

Erfindungsgemäß ist ein computerlesbares Speichermedium vorgesehen, umfassend Befehle, die bei der Ausführung durch ein Computersystem dieses veranlassen, die Schritte des erfindungsgemäßen Verfahrens auszuführen.

Ein Data Lake im Sinne dieses Dokumentes ist eine Methode zum Speichern von Daten in einem System oder Repository in seinem natürlichen Format, dass die Kollokation von Daten in verschiedenen Schemata und strukturellen Formen erleichtert. Hierbei werden alle Daten, von Rohdaten, welche die exakte Kopie der Quellsystemdaten beinhalten bis zu transformierten Daten, die für verschiedene Aufgaben wie Reporting, Visualisierung, Analytik und maschinelles Lernen verwendet werden in einem einzigen Speicher gespeichert. Der Data Lake beinhaltet strukturierte Daten aus relationalen Datenbanken (Zeilen und Spalten), semi-strukturierten Daten (CSV, Logs, XML, JSON), unstrukturierten Daten (E-Mails, Dokumente, PDFs) und sogar binären Daten (Bilder, Audio, Video). Mit anderen Worten ausgedrückt wird als Data Lake bezeichnet, wenn eine Version der im Datenspeicher enthaltenen Daten im Rohformat vorliegt. Das heißt es existiert eine Version der Daten, die nicht für bestimmte Anwendungen bzw. Applikationen vorverarbeitet wurde.

Ein Data Warehouse im Sinne dieses Dokumentes ist eine zentrale Datenbank oder zentrales Repository, für zusammengeführte Daten aus mehreren, in der Regel heterogenen und unabhängigen, Quellen.

Während hierarchisch aufgebaute Data Warehouses die Daten in Dateien oder Ordnern ablegen, werden sie in Data Lakes in einer flachen Architektur gespeichert.

Ein String im Sinne dieses Dokumentes ist eine Zeichenkette die eine Kette von Zeichen mit variabler Länge enthält. Ein String enthält somit hauptsächlich Wörter, Sätze und ganze Texte.

Eine Interaktionsschnittstelle im Sinne dieses Dokumentes ist eine Schnittstelle zwischen einem Benutzer und einer Recheneinheit. Die Interaktionsschnittstelle dient zur Aufnahme von Eingabestrings, welche vom Benutzer in die Recheneinheit eingegeben werden. Weiters dient die Interaktionsschnittstelle zur Anzeige bzw. Ausgabe von Ausgabestrings von der Recheneinheit an den Benutzer. Die Eingabe der Strings durch den Benutzer in die Recheneinheit kann textbasiert erfolgen. Darüber hinaus ist es auch denkbar, dass alternativ oder zusätzlich die Eingabe der Strings mittels Spracheingabe erfolgt. Die Interaktionsschnittstelle kann beispielsweise mit einer Tastatur gekoppelt sein, mittels welcher der Eingabestring eingegeben werden kann. In einem weiteren Ausführungsbeispiel ist es auch denkbar, dass die Interaktionsschnittstelle über ein Touchscreen verfügt, mittels welchem der Eingabestring eingegeben werden kann.

Die Ausgabe der Strings durch die Recheneinheit an den Benutzer kann textbasiert erfolgen. Darüber hinaus ist es auch denkbar, dass alternativ oder zusätzlich die Ausgabe der Strings über Sprachausgabe erfolgt.

Als Initialeingabestring wird jener String bezeichnet, welcher eine Interaktionssession startet. Insbesondere ist es denkbar, dass der Initialeingabestring der erste von einem bestimmten Benutzer eingegebene String ist. Weiters ist es auch denkbar, dass ein Dialog mit einem Benutzer gespeichert wird. Ein Initialeingabestring kann somit auch einer vorhergehenden Interaktionssession folgen.

Eine Interaktionssession beginnt mit einem durch den Benutzer eingegebenen Initialeingabestring und endet meist dadurch, dass dem Benutzer die von ihm abgefragte Information geliefert wird, oder dass eine Aktion durchgeführt wird. Eine Interaktionssession kann jeweils mehrere Interaktionsschritte enthalten. Eine neue Interaktionssession startet meistens mit der Eingabe eines neuen Initialeingabestrings durch den Benutzer und behandelt meistens ein neues Thema. Die einzelnen Interaktionssessions können in einem Interaktionsprotokoll gespeichert sein, wobei es auch denkbar ist, dass in nachfolgenden Interaktionssessions auf Abfragen einer früheren Interaktionssession zugegriffen wird.

Ein Client im Sinne dieses Dokumentes bezeichnet ein Endgerät, das Dienste vom Server abruft und mit diesem kommuniziert. Auch ein Computerprogramm, das auf dem Endgerät eines Netzwerks ausgeführt wird und mit einem Server kommuniziert kann als Client bezeichnet werden. In einem ersten Ausführungsbeispiel ist es denkbar, dass die Interaktionsschnittstelle vom Client örtlich entkoppelt ist. Insbesondere bei webbasierten Anwendungen kann vorgesehen sein, dass der Client an einem zentralen Rechner ausgeführt wird und die Interaktionsschnittstelle, beispielsweise ein Smartphone, ein Tablet oder ein Computer des Benutzers ausschließlich zur Dateneingabe und Datenausgabe dient. In einem weiteren Ausführungsbeispiel ist es denkbar, dass die Interaktionsschnittstelle und der Client in dieselbe Recheneinheit integriert sind.

Ein Server im Sinne dieses Dokumentes bezeichnet ein Computerprogramm oder einen Computer, der Computerfunktionalitäten wie Dienstprogramme, Daten oder andere Ressourcen bereitstellt, damit andere Computer oder Programme, welche als Clients bezeichnet werden, darauf zugreifen können, meist über ein Netzwerk.

Ein Indexknoten im Sinne dieses Dokumentes ist eine Speicherstelle für einen String, welcher vom Hauptalgorithmus bereitgestellt wird.

Als Vergleichswort kann jedes in einem Initialeingabestring oder Folgeeingabestring vorhandene Wort dienen. Alternativ dazu ist es auch denkbar, dass nicht alle Wörter eines Initialeingabestrings oder Folgeeingabestrings als Vergleichswort verwendet werden, sondern dass eine vorbestimmte Liste von Wörtern, wie etwa Konjunktionen, nicht als Vergleichswort verwendet werden.

Ein Modul im Sinne dieses Dokumentes ist ein Programm, das bei Bedarf auf den Client geladen werden kann, bzw. am Client vorgehalten werden kann und eine Schnittstelle zum Hauptalgorithmus aufweist. Ein Modul kann beispielsweise zum Befüllen einer Bestellmaske auf einer Webshopingseite konfiguriert sein, oder zum Befüllen einer Suchmaske in einer Suchmaschine konfiguriert sein. Die Module weisen standardisierte Schnittstellen auf. Beispielsweise ist es denkbar, dass Module von externen Dienstleistern programmiert werden und auf deren Datenverarbeitungssystem maßgeschneidert sind.

Ein Kubernetes-System ist auf seiner grundlegenden Ebene ein System zum Verwalten von containerisierten Anwendungen über einen Cluster von Knoten. Die meisten Clustering-Technologien sind bestrebt, eine einheitliche Plattform für die Anwendungsbereitstellung bereitzustellen. Der Benutzer sollte sich nicht viel darum kümmern müssen, wo die Arbeit geplant ist. Die Arbeitseinheit, die dem Benutzer präsentiert wird, befindet sich auf der "Service" -Ebene und kann von jedem der Mitgliedsknoten ausgeführt werden. In vielen Fällen spielt es jedoch eine Rolle, wie die zugrunde liegende Infrastruktur aussieht. Beim Skalieren einer Anwendung sorgt ein Administrator dafür, dass die verschiedenen Instanzen eines Dienstes nicht alle demselben Host zugewiesen sind. Auf der anderen Seite sind viele verteilte Anwendungen, die skalierbar sind, tatsächlich aus kleineren Komponentendiensten aufgebaut. Diese Dienste müssen auf demselben Host wie die zugehörigen Komponenten geplant werden, wenn sie auf triviale Weise konfiguriert werden. Dies wird noch wichtiger, wenn sie auf bestimmte Netzwerkbedingungen angewiesen sind, um angemessen zu kommunizieren. Während es bei den meisten Clustering-Software möglich ist, diese Art von Planungsentscheidungen zu treffen, ist es nicht optimal, auf der Ebene einzelner Dienste zu arbeiten. Anwendungen, die aus verschiedenen Diensten bestehen, sollten in den meisten Fällen immer noch als eine einzige Anwendung verwaltet werden. Kubernetes bietet eine Schicht über die Infrastruktur, um diese Art der Verwaltung zu ermöglichen.

In Kubernetes werden Server, die Arbeit ausführen, als Knoten bezeichnet. Knotenserver haben einige Anforderungen, die erforderlich sind, um mit den Masterkomponenten zu kommunizieren, das Netzwerk für Container zu konfigurieren und die ihnen zugewiesenen tatsächlichen Workloads auszuführen.

Der Prozess, mit dem Arbeitslasten bestimmten Knoten im Cluster zugewiesen werden, ist der Scheduler. Dies wird verwendet, um die Betriebsanforderungen eines Dienstes einzulesen, die aktuelle Infrastrukturumgebung zu analysieren und die Arbeit auf einem akzeptablen Knoten oder Knoten zu platzieren. Der Scheduler ist verantwortlich für die Verfolgung der Ressourcennutzung auf jedem Host, um sicherzustellen, dass die Auslastung der Workloads nicht über die verfügbaren Ressourcen hinaus geplant ist. Der Scheduler muss die gesamten Ressourcen, die auf jedem Server verfügbar sind, sowie die Ressourcen kennen, die den vorhandenen Arbeitslasten zugewiesen sind, die auf jedem Server zugewiesen sind.

Die erste Anforderung jedes einzelnen Knotenservers ist Docker. Der Docker-Dienst wird zum Ausführen von gekapselten Anwendungscontainern in einer relativ isolierten, jedoch leichtgewichtigen Betriebsumgebung verwendet. Jede Arbeitseinheit ist auf ihrer grundlegenden Ebene als eine Reihe von Containern implementiert, die bereitgestellt werden müssen. Eine wichtige Annahme von Kubernetes ist, dass jedem Knotenserver ein dediziertes Subnetz zur Verfügung steht. Docker muss so konfiguriert sein, dass er Ports in der richtigen Weise verfügbar macht.

Das computerimplementierte Verfahren arbeitet auf Basis von über 500 Modulen und 3 Schlüsselkomponenten, einem Data Lake oder Datawarehouse für das Ablegen von Vokabular, Syntaxinformationen und akquiriertem Wissen und einem Scoring Modell für die Berechnung der Relevanz einzelner Informationen. Weiters ist im Hauptalgorithmus ein Programmteil vorgesehen, welcher in der Lage ist, Verbindungen zwischen Informationen zu kappen, und neue Verbindungen zwischen Informationen bzw. zwischen einzelnen Indexknoten zu generieren und somit den Aufbau des Hauptalgorithmus zu verändern.

Wenn in die Interaktionsschnittstelle ein Initialeingabestring eingegeben wird, so werden im ersten der 6 Layer des Netzes jene Indexknoten aktiviert, welche dem Informationsgehalt des Inputs am nächsten kommen und über das Data Lake oder Datawarehouse mit Information gefüllt.

Die Indexknoten sind im Grunde leer und werden für jede Anfrage neu befüllt. Durch diesen Prozess kommt möglichst viel zielgerichtete Information in die Indexknoten des Hauptalgorithmus zur weiteren Verarbeitung. Jeder Indexknoten ist mit einem festen Lagerplatz im Data Lake oder Datawarehouse verbunden. Die Koppelung der Indexknoten mit dem entsprechendem Lagerplatz im Data Lake oder Datawarehouse basiert nicht auf Keywords, sondern auf kompletten Strings.

Somit ist das Verfahren in der Lage, schnell viele relevante Daten zu laden, zu simulieren und mit Hilfe des Scoring Modells die Treffsicherheit hochzurechnen, noch bevor der zweite Layer im Hauptalgorithmus angesprochen wird.

Wird nun im Scoring Modell ein Wert über 80 erreicht, so wird der Prozess auf den entsprechenden Indexknoten im Netz geroutet. Gleichzeitig werden alle umliegenden Indexknoten mit zugeordneten Daten aus dem Data Lake oder Datawarehouse versehen, um in weiteren Schritten ebenso hohe Scorings zu erreichen.

Wird allerdings dieser Schwellenwert nicht erreicht, so wurden entweder die falschen Lagerplätze angesprochen oder für die Bearbeitung dieser Anfrage benötigte Informationen noch nicht gelernt.

Üblich wäre es nun den eigenen Output als neuen Input zu verwenden und den ganzen Prozess neu zu starten, oder die Outputs einzelner Indexknoten in benachbarte Indexknoten desselben Layers zu übergeben und dort weiterzuarbeiten. Der Hauptalgorithmus bietet jedoch die Möglichkeit, fallende Scorings zu überwachen, Synapsen bzw. Verbindungen zu kappen und neue Indexknoten zu generieren. Der Hauptalgorithmus ist also in der Lage, die Verbindungen zwischen den Indexknoten bzw. die Verbindungen zwischen einem Indexknoten und dem Speicherort im Data Lake oder Datawarehouse neu zu strukturieren.

Wird ein neuer Indexknoten erstellt, so wird es wieder mit Wissen aus dem Data Lake oder Datawarehouse betankt und der Prozess startet neu auf der Suche nach einem genügend hohen Scoring.

Wird dieses wiederum nicht gefunden, so werden aus dem World Wide Web 3 Verifizierungen von Trusted Sources eingeholt und somit Wissen erweitert. Werden auch hier keine 3 eindeutigen Treffer gefunden, so wird der Support eingeschalten, welcher mit Hilfe von plain Text fehlende Informationen antrainiert.

Nun muss die neu gelernte Information mit bestehendem Wissen gematched werden, was wiederum über das Scoring Modell läuft. Gibt es keinen 100%igen Treffer, so wird ein neuer Indexknoten bzw. ein Neuer Datenbankeintrag im Data Lake oder Datawarehouse angelegt.

Der Hauptalgorithmus sucht nun in jedem Layer, ob ein zumindest 80%iger Treffer mit einem bestehenden Indexknoten gefunden werden kann. Wird eine solche Übereinstimmung gefunden, so wird es im Algorithmus mit dem Lagerplatz der neuen Information verbunden. Wird kein befriedigender Treffer gefunden, so muss ein neuer Indexknoten entstehen und der Hauptalgorithmus bildet eine neue Synapse bzw. Verbindung auf dem ersten Layer.

Ein wichtiger Bestandteil des Prozesses ist die über 500 Einzelmodule zählende Modullandschaft, auf die zugegriffen werden kann. Dadurch können verschiedenste Webinhalte und verschiedenste Applikationen bedient werden. Diese Module können simultan oder sequenziell zur Bearbeitung der Anfrage verwendet werden.

Das computerimplementierte Verfahren kann z.B. gleichzeitig per Chat einen Dialog führen, über diesen Dialog Arbeitsaufträge erkennen, und die Arbeitsaufträge im Hintergrund abarbeiten.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Übersichtsdarstellung der Struktur eines Computersystems aus Client und Server;
- Fig. 2: eine schematische Darstellung eines ersten Arbeitsablaufes des computerimplementierten Verfahrens;
- Fig. 3: eine schematische Darstellung der Topologie des computerimplementierten Verfahrens;
- Fig. 4: eine schematische Darstellung eines zweiten Arbeitsablaufes des computerimplementierten Verfahrens;
- Fig. 5: eine schematische Darstellung eines dritten Arbeitsablaufes des computerimplementierten Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

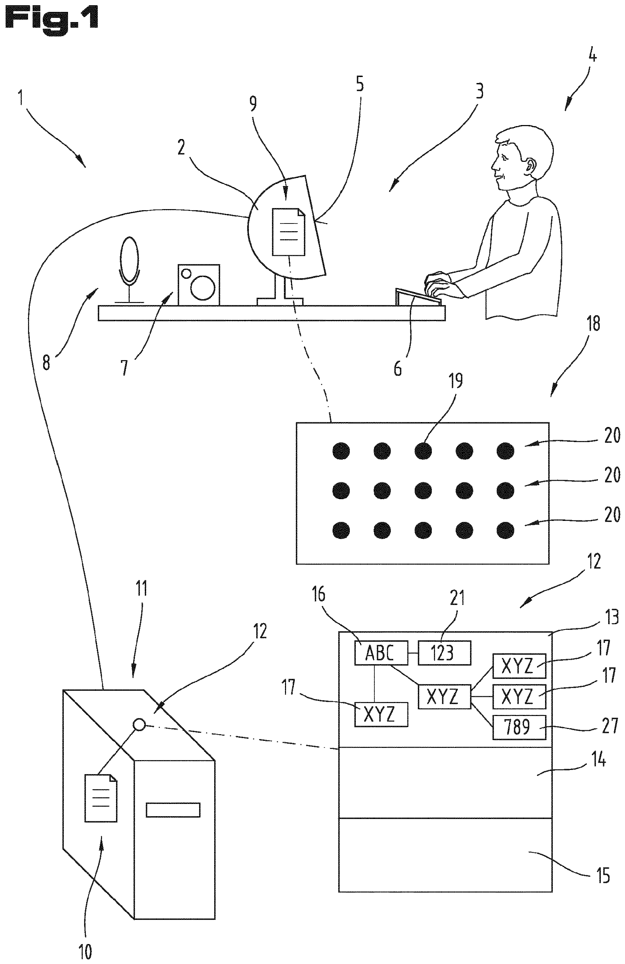

Fig. 1 zeigt einen schematischen Aufbau eines Ausführungsbeispiels eines Computersystems 1 zur Datenverarbeitung. Wie aus dem vorliegenden Ausführungsbeispiel ersichtlich, kann vorgesehen sein, dass das Computersystem 1 eine erste Recheneinheit 2 aufweist. Die erste Recheneinheit 2 ist mit einer Interaktionsschnittstelle 3 gekoppelt, welche zur Aufnahme von Eingabestrings bzw. Anzeige von Ausgabestrings von der ersten Recheneinheit 2 an einen Benutzer 4 gekoppelt ist.

Die Interaktionsschnittstelle 3 kann beispielsweise einen Bildschirm 5 und eine Tastatur 6 aufweisen. Weiters ist es auch denkbar, dass die Interaktionsschnittstelle 3 alternativ oder zusätzlich einen Lautsprecher 7 und/oder ein Mikrofon 8 aufweist.

Weiters kann auch vorgesehen sein, dass Interaktionsschnittstelle 3 einen touchfähigen Bildschirm 5 zur direkten Informationseingabe aufweist.

Insbesondere kann vorgesehen sein, dass an der ersten Recheneinheit 2 ein Client 9 ausgeführt wird, welcher mit einem Server 10 kommuniziert. Der Server 10 kann hierbei auf einer zweiten Recheneinheit 11 ausgeführt werden. Weiters kann vorgesehen sein, dass der Server 10 ein Data Lake oder ein Datawarehouse 12 aufweist, in welchem Informationen abgespeichert sind.

Das Data Lake oder Datawarehouse 12 kann einen Hauptspeicher 13 aufweisen, in welchem die für das computerimplementierte Verfahren erforderlichen Stringdaten bzw. die Verknüpfungen zwischen den Daten abgespeichert sind.

Weiters können im Data Lake oder Datawarehouse 12 in einem Userprofilspeicher 14 angelegte Benutzer bzw. Benutzergruppen bzw. die diesen Personen bzw. Personengruppen zugeordneten Daten und Verlinkungen abgespeichert sein.

Weiters kann im Data Lake oder Datawarehouse 12 ein Kurzzeitgedächtnis-Speicherplatz 15 vorgesehen sein, in welchem jene Daten abgespeichert werden, deren Informationsgehalt nur eine begrenzte Zeitdauer eine Gültigkeit aufweist. Die in diesem Kurzzeitgedächtnis-Speicherplatz 15 abgespeicherten Daten können bei Bedarf bzw. auf Anfrage aktualisiert werden. Ein Beispiel für derartige Daten kann beispielsweise das aktuelle Wetter, der Start von Kinofilmen usw. sein.

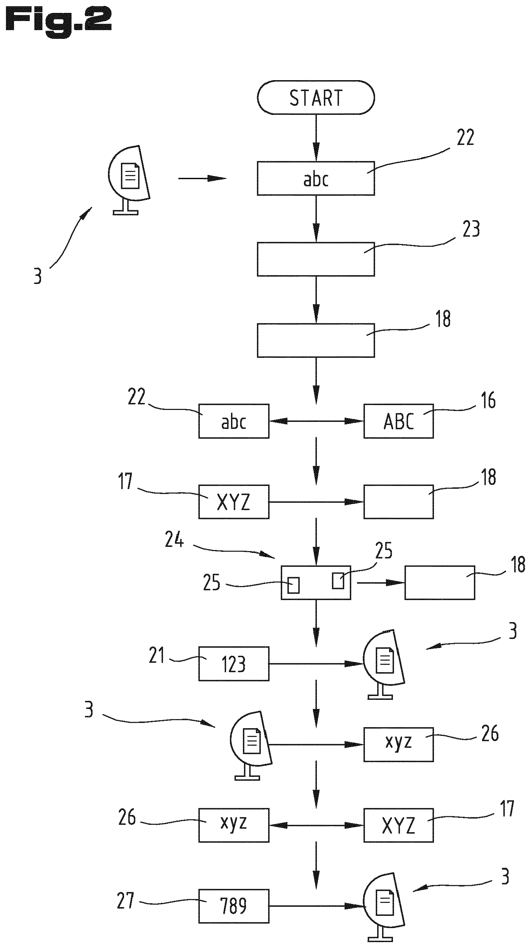

Im Data Lake oder Datawarehouse 12 können Vergleichsstrings 16 abgespeichert sein, welche zum Vergleichen mit in eine Abfrage eingegebenen Eingabestrings dienen. Der genaue Abfragemodus wird in Fig. 2 noch näher beschrieben.

Weiters können mit dem Vergleichsstring 16 Folgevergleichsstrings 17 verknüpft sein bzw. diesen zugeordnet sein, welche zum Vergleich mit Folgeabfragen dienen. Die Folgevergleichsstrings 17, welche mit einem Vergleichsstring 16 verknüpft sind, sind diesem thematisch zugeordnet.

Weiters kann vorgesehen sein, dass am Client 9 ein Hauptalgorithmus 18 ausgeführt wird, welcher zum Verarbeiten einer Eingabe in die Interaktionsschnittstelle 3 dient.

Insbesondere kann vorgesehen sein, dass im Hauptalgorithmus 18 mehrere Indexknoten 19 vorgehalten werden, welche jeweils zum Befüllen mit einem Folgevergleichsstring 17 bzw. den zugehörigen oder zugeordneten Daten dienen. Insbesondere kann vorgesehen sein, dass die Indexknoten 19 in verschiedenen Layern 20 strukturiert sind.

Wie aus Fig. 1 ersichtlich, kann vorgesehen sein, dass mehrere Folgevergleichsstrings 17 einem Vergleichsstring 16 zugeordnet sind.

Weiters ist es auch denkbar, dass einem Folgevergleichsstring 17 wiederrum ein oder mehrere Folgevergleichsstrings 17 zugeordnet sind. Dies sind dann Folgevergleichsstrings 17 einer zweiten Ebene bzw. eines zweiten Layers. Ein derartiger Layeraufbau ist nicht durch eine definierte Anzahl an Ebenen beschränkt. Natürlich kann ein Folgevergleichsstring 17 auch mehreren Vergleichsstrings 16 zugeordnet sein, bzw. analog dazu in der zweiten oder einer weiteren Ebene auch mehreren Folgevergleichsstrings 17 zugeordnet sein.

Weiters ist es auch denkbar, dass einem Vergleichsstring 16 ein Initialausgabestring 21 zugeordnet ist. Analog dazu ist es auch denkbar, dass einem Folgevergleichsstring 17 ein Folgeausgabestring 27 zugeordnet ist.

Weiters ist es auch denkbar, dass einem Vergleichsstring 16 analog dazu einem Folgevergleichsstring 17 Module 25 zugeordnet sind, welche in einem Modulreservoir 24 abgespeichert sind.

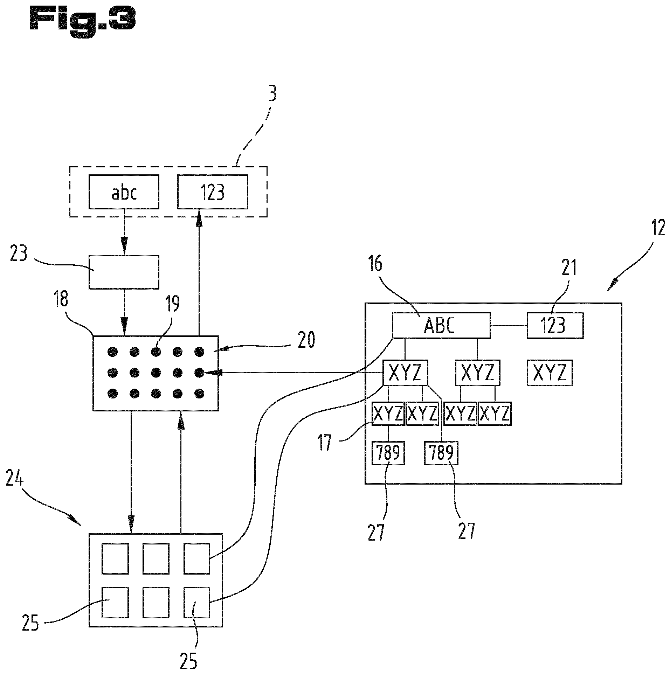

Anhand der schematischen Darstellung der Fig. 2 wird ein möglicher Verfahrensablauf des computerimplementierten Verfahrens zur Interaktion mit dem Benutzer 4 beschrieben. Hierbei wird ein exemplarischer topologischer Aufbau, wie er in Fig. 3 beschrieben ist, zum besseren Verständnis ebenfalls miteinbezogen.

Zum Starten des Verfahrens kann vorgesehen sein, dass durch den Benutzer 4 über die Interaktionsschnittstelle 3 ein Initialeingabestring 22 in den Client 9 eingegeben wird.

Der Initialeingabestring 22 kann optional von einem Algorithmus zum Planen und Verteilen des Arbeitsablaufs 23 erfasst werden. Dieser Arbeitsschritt ist optional und nicht zwingend erforderlich. Wenn der Initialeingabestring 22 von einem Algorithmus zum Planen und Verteilen des Arbeitsablaufs 23, beispielsweise einem Kubernetes-System, erfasst wird, so können beispielsweise weitere Arbeitsschritte gezielt durchgeführt werden.

In einem weiteren Verfahrensschritt kann der Initialeingabestring 22 dem Hauptalgorithmus 18 zugeführt werden. Hierbei kann der komplette Initialeingabestring in seine Einzelsegmente, wie etwa Wörter, aufgeteilt werden, welche für den weiteren Verfahrensablauf dienen. Insbesondere kann vorgesehen sein, dass hierbei eine Gruppe von Vergleichswörtern gebildet wird. Die Vergleichswörter können entweder in einer bestimmten Abfolge oder aber auch unabhängig von deren Abfolge für Vergleichsabfragen dienen. Weiters kann vorgesehen sein, dass nicht alle Wörter des Initialeingabestrings 22 in die Gruppe der Vergleichswörter aufgenommen werden, sondern dass bestimmte Wortgruppen, wie etwa Füllwörter, nicht als Vergleichswörter dienen.

Der Hauptalgorithmus 18 kann häufig auftretende Initialeingabestrings 22 direkt erkennen und diesen Initialeingabestrings 22 zugeordnete Verfahrenshandlungen durchführen.

Wenn nicht schon im Hauptalgorithmus 18 ein häufig verwendeter Initialeingabestring 22 erkannt und weiterverarbeitet wird, so können in einem anschließenden Verfahrensschritt die aus dem Initialeingabestring 22 extrahierten Vergleichswörter mit den verschiedenen im Data Lake oder Datawarehouse 12 gespeicherten Vergleichsstrings 16 verglichen werden.

Bei diesem Vergleich werden all jene Vergleichsstrings 16 als relevant bzw. als Treffer erachtet, bei welchen die Übereinstimmung der Vergleichswörter mit dem Vergleichsstring 16 einen vordefinierbaren Schwellenwert überschreitet. Der Schwellenwert kann hierbei als Prozentzahl an Übereinstimmung ausgedrückt werden.

Weiters kann vorgesehen sein, dass jener Vergleichsstring 16, welche die größte Übereinstimmung mit den Vergleichswörtern des Initialeingabestrings 22 aufweist, als jener Vergleichsstring 16 mit der größten Relevanz identifiziert wird.

In einem weiteren Verfahrensschritt können die Folgevergleichsstrings 17, welche dem Vergleichsstring 16 mit der größten Relevanz zugeordnet sind, in die Indexknoten 19 des Hauptalgorithmus 18 und somit in den Client 9 geladen werden. Hierbei ist es notwendig, dass die Daten vom Server 10 auf den Client 9 übertragen werden. Insbesondere kann hierbei vorgesehen sein, dass je Indexknoten 19 ein dem Vergleichsstring 16 zugeordneter Folgevergleichsstring 17 bzw. die zugehörigen Daten geladen werden. Weiters ist es auch denkbar, dass alle Folgevergleichsstrings 17, welche jenen Vergleichsstrings 16 zugeordnet sind, bei welchen die Übereinstimmung der Vergleichswörter mit dem Vergleichsstring 16 einen vordefinierbaren Schwellenwert überschreitet, in die die Indexknoten 19 des Hauptalgorithmus 18 geladen werden.

In einem ersten Ausführungsbeispiel kann vorgesehen sein, dass ein Indexknoten 19 direkt einem im Data Lake oder Datawarehouse 12 gespeicherten Folgevergleichsstring 17 bzw. den damit zusammenhängenden Daten zugeordnet ist. Die Daten werden somit an einen bestimmten vorgesehenen Indexknoten 19 übertragen.

In einem weiteren Ausführungsbeispiel ist es auch denkbar, dass die vorgesehenen Indexknoten 19 der Reihe nach mit Folgevergleichsstrings 17 bzw. den damit zusammenhängenden Daten gefüllt werden.

Die direkt dem Vergleichsstring 16 zugeordneten Folgevergleichsstrings 17 können hierbei in einem ersten Layer 20 in die Indexknoten 19 geladen werden. Weiters ist es auch denkbar, dass in einer zweiten Folgevergleichsstringebene Folgevergleichsstrings 17, welche einem übergeordneten Folgevergleichsstring 17 zugeordnet sind, ebenfalls in Indexknoten 19 in einem weiteren Layer 20 geladen werden. Weiters kann der dem Vergleichsstring 16 mit der größten Übereinstimmung zugeordnete Initialausgabestring 21 an die Interaktionsschnittstelle 3 ausgegeben werden, um dem Benutzer 4 eine Antwort bzw. weitere Verfahrensanweisungen auf den von ihm eingegebenen Initialeingabestring 22 ausgeben.

Zusätzlich können aus einem Modulreservoir 24 Module 25 in den Hauptalgorithmus 18 geladen bzw. diesem zugeordnet werden. Hierbei kann ebenfalls vorgesehen sein, dass nur jene Module 25 in den Hauptalgorithmus 18 geladen werden, welche einem jener Vergleichsstrings 16 zugeordnet sind bei welchen die Übereinstimmung der Vergleichswörter mit dem Vergleichsstring 16 einen vordefinierbaren Schwellenwert überschreitet.

Außerdem kann jener Initialausgabestring 21, welcher dem Vergleichsstring 16 mit der höchsten Übereinstimmung mit dem Initialeingabestring 22 zugeordnet ist, an die Interaktionsschnittstelle 3 ausgegeben werden.

In einem weiteren Verfahrensschritt kann der Benutzer 4 einen Folgeeingabestring 26 in Reaktion auf den Initialausgabestring 21 an die Interaktionsschnittstelle 3 eingeben. Der Folgeeingabestring 26 wird hierbei analog zum bereits beschriebenen Ablauf im Zusammenhang mit dem Initialeingabestring 22 ebenfalls in Vergleichswörter aufgeteilt. Diese Vergleichswörter werden anschließend auf Übereinstimmung mit den in den Indexknoten 19 im Hauptalgorithmus 18 gespeicherten Folgevergleichsstrings 17 verglichen.

Hierbei werden vorzugsweise nur jene Folgevergleichsstrings 17 zum Vergleich herangezogen, welche in einem bestimmten Layer 20 in einem Indexknoten 19 gespeichert sind. Alternativ dazu ist es auch denkbar, dass die Folgevergleichsstrings 17 unabhängig vom Layer 20, in dem sie abgespeichert sind, alle zum Vergleich mit Folgeeingabestrings 26 herangezogen werden, sobald sie in die Indexknoten 19 geladen wurden.

Der wesentliche Unterschied im Umgang mit Initialeingabestrings 22 und Folgeeingabestrings 26 liegt darin, dass Initialeingabestrings 22 mit den im Data Lake oder Datawarehouse abgespeicherten Vergleichsstrings 16 verglichen werden und Folgeeingabestrings 26 mit den aus dem Data Lake oder Datawarehouse 12 in die Indexknoten 19 des Hauptalgorithmus 18 geladenen Folgevergleichsstrings 17 verglichen werden. Da beim Laden der Folgevergleichsstrings 17 im ersten Verfahrensschritt bereits eine gewisse Vorauswahl getroffen wurde, kann somit beim Überprüfen der Folgeeingabestrings 26 energie- und zeitsparend im kleineren Datenpool der Folgevergleichsstrings 17 nach Übereinstimmungen gesucht werden. Darüber hinaus wird durch diese Maßnahme ermöglicht, dass die weitere soeben beschriebene Vergleichsabfrage zwischen Folgeeingabestring 26 und Folgevergleichsstring 17 ausschließlich auf dem Client 9 abgewickelt wird und der Server 10 somit nicht mehr gesondert angesprochen werden muss und somit auch keine Daten übertragen werden müssen. Dadurch kann ebenfalls die Effizienz des erfindungsgemäßen Verfahrens gesteigert werden.

Anschließend kann ein Folgeausgabestring 27 an die Interaktionsschnittstelle 3 ausgegeben werden. Der Folgeausgabestring 27 kann hierbei mit jenem Folgevergleichsstring 17 verknüpft sein, welcher die höchste Übereinstimmung mit dem Folgeeingabestring 26 aufweist.

Optional können zusätzlich weitere Folgevergleichsstrings 17, welche jenem Folgevergleichsstring 17 mit der größten Übereinstimmung zugeordnet sind, aus dem Data Lake oder Datawarehouse 12 in den Hauptalgorithmus 18 geladen werden. Alternativ dazu ist es auch denkbar, dass diese zugeordneten weiteren Folgevergleichsstrings 17 bereits in der zuvor beschriebenen, ersten Initialeingabe ein weiterer Layer 20 des Hauptalgorithmus 18 geladen wurden. Hierbei können für die Verarbeitung des nächsten Folgeeingabestrings 26 die weiteren Layer 20 bzw. der weitere Layer 20 des Hauptalgorithmus 18 angesprochen werden.

Zusätzlich können die Folgeeingabestrings 26 zum Eingeben von Befehlen bzw. von Information in die Module 25 dienen. Hierbei können beispielsweise für einen Bestellvorgang oder Buchungsvorgang relevante Informationen in ein Modul 25 für Bestellungen oder Buchungen eingegeben werden.

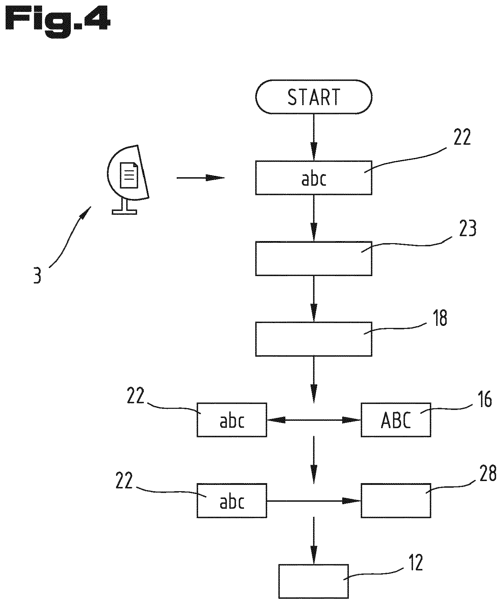

In der Fig. 4 ist eine weitere und gegebenenfalls für sich eigenständige Ausführungsform des Verfahrensablaufes gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Fig. 4 zeigt schematisch den Verfahrensablauf wie er auftritt, wenn der Initialeingabestring 22 keine ausreichende Übereinstimmung mit dem Vergleichsstring 16 aufweist.

Gleich wie im Ablauf von Fig. 2 können folgende Schritte vorgesehen sein.

Zum Starten des Verfahrens kann vorgesehen sein, dass durch den Benutzer 4 über die Interaktionsschnittstelle 3 ein Initialeingabestring 22 in den Client 9 eingegeben wird.

In einem weiteren Verfahrensschritt kann der Initialeingabestring 22 dem Hauptalgorithmus 18 zugeführt werden. Hierbei kann der komplette Initialeingabestring in seine Einzelsegmente, wie etwa Wörter, aufgeteilt werden, welche für den weiteren Verfahrensablauf dienen. Insbesondere kann vorgesehen sein, dass hierbei eine Gruppe von Vergleichswörtern gebildet wird. Die Vergleichswörter können entweder in einer bestimmten Abfolge oder aber auch unabhängig von deren Abfolge für Vergleichsabfragen dienen. Weiters kann vorgesehen sein, dass nicht alle Wörter des Initialeingabestrings 22 in die Gruppe der Vergleichswörter aufgenommen werden, sondern dass bestimmte Wortgruppen, wie etwa Füllwörter, nicht als Vergleichswörter dienen.

In einem anschließenden Verfahrensschritt können die aus dem Initialeingabestring 22 extrahierten Vergleichswörter mit den verschiedenen im Data Lake oder Datawarehouse 12 gespeicherten Vergleichsstrings 16 verglichen werden.

Wenn jedoch kein Vergleichsstring 16 gefunden werden kann, bei welchen die Übereinstimmung der Vergleichswörter mit dem Vergleichsstring 16 einen vordefinierbaren Schwellenwert überschreitet, so wird die Suche im Data Lake oder Datawarehouse 12 abgebrochen.

In diesem Fall wird in Trusted Sources 28 nach Übereinstimmung mit den Vergleichswörtern des Initialeingabestrings 22 gesucht. Wenn hierbei in einer der Trusted Sources 28 eine ausreichende Übereinstimmung vorgefunden wird, so wird die zugehörige Information aus der Trusted Sources 28 abgerufen und zwischengespeichert. Erst wenn in zumindest einer vordefinierten Anzahl, insbesondere drei, der angegebenen Trusted Sources 28 eine übereinstimmende Information abgerufen werden kann, wird diese neu gewonnene Information in das Data Lake oder Datawarehouse 12 gespeichert. Insbesondere wird hierbei ein neuer Vergleichsstring 16 angelegt, welcher den Vergleichswörtern des nicht aufgefundenen Initialeingabestrings 22 entspricht und werden die in den Trusted Sources 28 aufgefundenen Informationen diesen neu angelegten Vergleichsstring 16 zugeordnet.

Das obig beschriebene Verfahren kann analog zur erfolglosen suche von Vergleichsstrings 16 auch bei der erfolglosen Suche von Folgevergleichsstrings 17 angewandt werden, um die Information in Trusted Sources 28 zu finden.

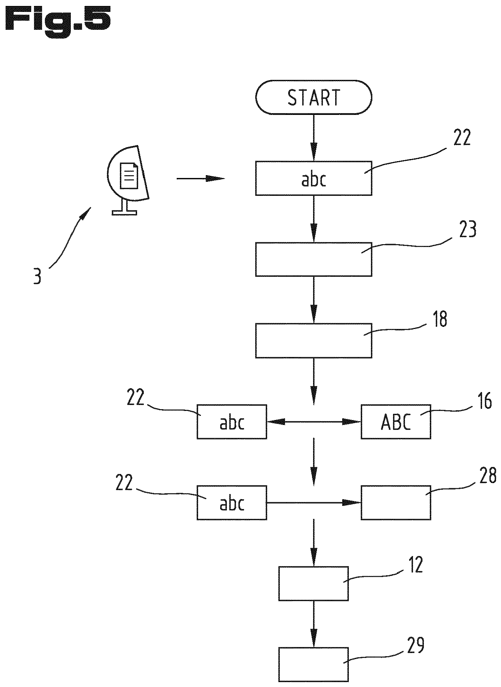

In der Fig. 5 ist eine weitere und gegebenenfalls für sich eigenständige Ausführungsform des Verfahrensablaufes gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Im Verfahrensablauf nach Fig. 5 ist jene Situation dargestellt, wenn auch in den Trusted Sources 28 keine ausreichende Übereinstimmung mit den Vergleichswörtern des Initialeingabestrings 22 bzw. Folgeeingabestrings 26 aufgefunden werden kann. Die ersten Verfahrensschritte sind somit gleich, wie in der Beschreibung zum Verfahren aus Fig. 4.

Werden in den Trusted Sources 28 ebenfalls keine relevanten Informationen zu einem Initialeingabestring 22 bzw. zu einem Folgeeingabestring 26 gefunden, so wird der Initialeingabestring 22 bzw. der Folgeeingabestring 26 an einen Support 29 weitergeleitet. Im Support 29 wird der Initialeingabestring 22 bzw. der Folgeeingabestring 26 einem menschlichen Support-Mitarbeiter vorgelegt, welcher eine entsprechende Information, insbesondere einen Initialausgabestring 21 bzw. einen Folgeausgabestring 27 im Data Lake oder Datawarehouse 12 anlegt. Zusätzlich können vom Mitarbeiter im Support 29 Module 25 bzw. Folgevergleichsstrings 17 mit dem neu angelegten Vergleichsstring 16 verknüpft werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8, 1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Computersystem
- 2: erste Recheneinheit
- 3: Interaktionsschnittstelle
- 4: Benutzer
- 5: Bildschirm
- 6: Tastatur
- 7: Lautsprecher
- 8: Mikrofon
- 9: Client
- 10: Server
- 11: zweite Recheneinheit
- 12: Data Lake oder Datawarehouse
- 13: Hauptspeicher
- 14: Userprofilspeicher
- 15: Kurzzeitgedächtnis - Speicherplatz
- 16: Vergleichsstring
- 17: Folgevergleichsstring
- 18: Hauptalgorithmus
- 19: Indexknoten
- 20: Layer
- 21: Initialausgabestring
- 22: Initialeingabestring
- 23: Algorithmus zum Planen und Verteilen eines Arbeitsablaufs
- 24: Modulreservoir
- 25: Modul
- 26: Folgeeingabestring
- 27: Folgeausgabestring
- 28: Trusted Source
- 29: Support

## Patentansprüche

1. Computerimplementiertes Verfahren, umfassend die Schritte:
- Erfassen eines durch einen Benutzer (4) in eine Interaktionsschnittstelle (3) eingegebenen Initialeingabestrings (22);
- Verarbeiten des Initialeingabestrings (22) in einem Hauptalgorithmus (18), welcher auf einem Client (9) ausgeführt wird, wobei vom Hauptalgorithmus (18) die einzelnen Wörter des Initialeingabestrings (22) extrahiert werden und daraus Vergleichswörter bestimmt werden;
- Durchführen einer Initialabfrage und dabei vergleichen der einzelnen Vergleichswörter des Initialeingabestrings (22) mit einer Vielzahl von Vergleichsstrings (16), welche auf einem Server (10) in einem Data Lake oder Datawarehouse (12) gespeichert sind;
- Ausführen der folgenden Verfahrensschritte, wenn ein vordefinierbarerer Schwellenwert an Übereinstimmung von Vergleichswörtern des Initialeingabestrings (22) mit einem oder mehreren der im Data Lake oder Datawarehouse (12) gespeicherten Vergleichsstrings (16) überschritten wird:
a) Übertragen von Daten vom Server (10) zum Client (9) zum Befüllen von im Hauptalgorithmus (18) bereitgestellten Indexknoten (19) mit Folgevergleichsstrings (17) aus dem Data Lake oder Datawarehouse (12), wobei jene Folgevergleichsstrings (17) in Indexknoten (19) übertragen werden, welche mit jenem Vergleichsstring (16) verknüpft sind, der eine den vordefinierten Schwellenwert überschreitende Übereinstimmung mit dem Initialeingabestring (22) aufweist;
b) Ausgabe eines Initialausgabestrings (21) an die Interaktionsschnittstelle (3), wobei jener Initialausgabestring (21) an die Interaktionsschnittstelle (3) ausgegeben wird, welcher mit jenem Vergleichsstring (16) verknüpft ist, der eine den vordefinierten Schwellenwert überschreitende Übereinstimmung mit dem Initialeingabestring (22) aufweist;
c) Erfassen eines durch den Benutzer (4) in eine Interaktionsschnittstelle (3) eingegebenen Folgeeingabestrings (26);
d) Verarbeiten des Folgeeingabestrings (26) im Hauptalgorithmus (18), wobei vom Hauptalgorithmus (18) die einzelnen Vergleichswörter aus dem Folgeeingabestring (26) extrahiert werden;
e) Durchführen einer Folgeabfrage und dabei vergleichen der einzelnen Vergleichswörter des Folgeeingabestrings (26) mit den in den Indexknoten (19) bereitgestellten mit Folgevergleichsstrings (17);
f) Auslösen eines Folgebefehls, wenn ein vordefinierbarerer Schwellenwert an Übereinstimmung von Vergleichswörtern des Folgeeingabestrings (26) mit einem oder mehreren der in den Indexknoten (19) bereitgestellten mit Folgevergleichsstrings (17) überschritten wird.

2. Computerimplementiertes Verfahren nach Anspruch 1, **dadurch gekennzeichnet, dass** die Indexknoten (19) im Hauptalgorithmus (18) in einer Layerstruktur mit mehreren Layern (20) strukturiert sind, wobei in der Folgeabfrage der Folgeeingabestring (26) nur mit jenen Folgevergleichsstrings (17) von Indexknoten (19) verglichen wird, welche in einem bestimmten Layer (20) angeordnet sind.

3. Computerimplementiertes Verfahren nach Anspruch 1 oder 2, **dadurch gekennzeichnet, dass** wenn ein vordefinierbarerer Schwellenwert an Übereinstimmung von Vergleichswörtern des Initialeingabestrings (22) mit einem oder mehreren der im Data Lake oder Datawarehouse (12) gespeicherten Vergleichsstrings (16) überschritten wird, zusätzlich aus einem Modulreservoir (24) jene Module (25) geladen werden, welche diesem Vergleichsstring (16) zugeordnet sind.

4. Computerimplementiertes Verfahren nach einem der vorhergehenden Ansprüche,
**dadurch gekennzeichnet, dass** der vordefinierbare Schwellenwert an Übereinstimmung zwischen 70% und 100%, insbesondere zwischen 75% und 90%, bevorzugt zwischen 78% und 85% der Vergleichswörter des Initialeingabestrings (22) und/oder des Folgeeingabestrings (26) beträgt.

5. Computerimplementiertes Verfahren nach einem der vorhergehenden Ansprüche,
**dadurch gekennzeichnet, dass** wenn ein vordefinierbarerer Schwellenwert an Übereinstimmung von Vergleichswörtern des Initialeingabestrings (22) mit einem oder mehreren der im Data Lake oder Datawarehouse (12) gespeicherten Vergleichsstrings (16) nicht überschritten wird, folgende Verfahrensschritte ausgeführt werden:
- Suche, ob ein vordefinierbarerer Schwellenwert an Übereinstimmung von Vergleichswörtern des Initialeingabestrings (22) mit einem String in einer von als Trusted Sources (28) deklarierten Webseiten überschritten wird, wobei diese Aktion bei so vielen Trusted Sources (28) wiederholt wird, bis eine vorbestimmte Anzahl an Treffer erreicht wird;
- wenn die vorbestimmte Anzahl an Treffer erreicht wird, dann wird die aus diesen getroffenen Trusted Sources (28) ermittelte Information in das Data Lake oder Datawarehouse (12) gespeichert, wobei gleichzeitig der betreffende Initialeingabestring (22) als Vergleichsstring (16) im Data Lake oder Datawarehouse (12) gespeichert wird und mit der ermittelten Information verknüpft wird, sodass bei zukünftigen Interaktionssessions der neu erstellte Vergleichsstring (16) zur Verfügung steht.

6. Computerimplementiertes Verfahren nach Anspruch 5, **dadurch gekennzeichnet, dass** wenn die vorbestimmte Anzahl an Treffer nicht erreicht wird, der Initialeingabestring (22) an einen Support (29) zur Informationseingabe durch einen Menschen übermittelt wird.

7. Computerimplementiertes Verfahren nach einem der vorhergehenden Ansprüche, **dadurch gekennzeichnet, dass** wenn ein vordefinierbarerer Schwellenwert an Übereinstimmung von Vergleichswörtern des Folgeeingabestrings (26) mit den in den Hauptalgorithmus (18) übertragenen Folgevergleichsstrings (17) nicht überschritten wird, folgende Verfahrensschritte ausgeführt werden:
- Suche, ob ein vordefinierbarerer Schwellenwert an Übereinstimmung von Vergleichswörtern des Folgeeingabestrings (26) mit einem String in einer von als Trusted Sources (28) deklarierten Webseiten überschritten wird, wobei diese Aktion bei so vielen Trusted Sources (28) wiederholt wird, bis eine vorbestimmte Anzahl an Treffer erreicht wird;
- wenn die vorbestimmte Anzahl an Treffer erreicht wird, dann wird die aus diesen getroffenen Trusted Sources (28) ermittelte Information in das Data Lake oder Datawarehouse (12) gespeichert, wobei gleichzeitig der betreffende Folgeeingabestring (26) als Folgevergleichsstring (17) im Data Lake oder Datawarehouse (12) gespeichert wird und mit der ermittelten Information verknüpft wird, sodass bei zukünftigen Interaktionssessions der neu erstellte Folgevergleichsstring (17) zur Verfügung steht.

8. Computerimplementiertes Verfahren nach Anspruch 7, **dadurch gekennzeichnet, dass** die Zuordnung von Folgevergleichsstrings (17) zu Vergleichsstrings (16) im Data Lake oder Datawarehouse (12) gelöscht wird, wenn eine bestimmte Anzahl an Interaktionssessions vorliegt, in denen ein vordefinierbarerer Schwellenwert an Übereinstimmung von Vergleichswörtern des Folgeeingabestrings (26) mit den in den Hauptalgorithmus (18) übertragenen Folgevergleichsstrings (17) nicht überschritten wird.

9. Computerimplementiertes Verfahren nach einem der vorhergehenden Ansprüche,
**dadurch gekennzeichnet, dass** für häufig vorkommende Initialeingabestrings (22) bzw. Folgeeingabestrings (26) vom Hauptalgorithmus (18) ein Initialausgabestring (21) ausgegeben wird, ohne dass der Hauptalgorithmus (18) dabei auf das Data Lake oder Datawarehouse (12) zugreifen muss.

10. Computerimplementiertes Verfahren nach einem der vorhergehenden Ansprüche,
**dadurch gekennzeichnet, dass** dem Hauptalgorithmus (18) ein Algorithmus zum Planen und Verteilen eines Arbeitsablaufs (23), wie etwa ein Kubernetes-System, vorgeschalten ist.

11. Computerimplementiertes Verfahren nach einem der vorhergehenden Ansprüche,
**dadurch gekennzeichnet, dass** im Data Lake (12) ein Kurzzeitgedächtnis - Speicherplatz (15) ausgebildet ist, welcher die ihm zugeordneten Informationen auf Anforderung abfragt und aktualisiert, wobei insbesondere Websites als Datenquellen dienen.

12. Computersystem (1) zur Datenverarbeitung, umfassend Mittel zur Ausführung der Schritte des Verfahrens nach einem der Ansprüche 1 bis 11.

13. Computersystem (1) nach Anspruch 12, **dadurch gekennzeichnet, dass** der Client (9) auf einer ersten Recheneinheit (2) und der Server (10) auf einer zweiten Recheneinheit (11) ausgebildet sind, wobei die erste Recheneinheit (2) und die zweite Recheneinheit (11) örtlich getrennt voneinander angeordnet sind.

14. Computerprogrammprodukt, umfassend Befehle, die bei der Ausführung des Programms durch ein Computersystem dieses veranlassen, die Schritte des Verfahrens nach einem der Ansprüche 1 bis 11 auszuführen.

15. Computerlesbares Speichermedium, umfassend Befehle, die bei der Ausführung durch ein Computersystem dieses veranlassen, die Schritte des Verfahrens nach einem der Ansprüche 1 bis 11 auszuführen.
